# EUROPÄISCHE PATENTSCHRIFT

(11) **EP 4 414 247 B1**
(45) Veröffentlichungstag und Bekanntmachung des Hinweises auf die Patenterteilung: **30.09.2026**
(21) Anmeldenummer: 23218946.4
(22) Anmeldetag: 21.12.2023
(51) Int. Cl.: B62D 25/14, B62D 29/00

(54) **INSTRUMENTENQUERTRÄGER UND DESSEN HERSTELLVERFAHREN**
INSTRUMENT CROSS-MEMBER AND METHOD FOR MANUFACTURING THE SAME
SUPPORT TRANSVERSAL POUR INSTRUMENTS ET SON PROCÉDÉ DE FABRICATION

(43) Veröffentlichungstag der Anmeldung: 14.08.2024
(73) Patentinhaber: GF Casting Solutions AG, 8201 Schaffhausen (CH)
(72) Erfinder: PHILIPP, Stephan, 78262 Gailingen (DE); Gunia, Marc, 8200 Schaffhausen (CH); Stark, Benedikt, 79780 Stühlingen (DE); Tschepe, Steven, 78267 Aach (DE)
(74) Vertreter: Cohausz & Florack

(56) Entgegenhaltungen:
- EP-B1- 1 032 528
- DE-B3- 102022 116 803
- FR-A1- 2 623 776

## Beschreibung

Die Erfindung betrifft einen Instrumentenquerträger eines Kraftfahrzeugs, und dessen Herstellverfahren enthaltend eine Quertraverse, wobei die Quertraverse sich quer zur Längsrichtung des Kraftfahrzeugs von einer A-Säule zu einer gegenüberliegenden A-Säule erstreckt.

In heutigen Kraftfahrzeugen wird in der Regel zur Befestigung von diversen Cockpitfunktionen als tragendes Bauteil ein Querträger vorgesehen, der sich im Wesentlichen ausschliesslich horizontal von einer A-Säule zur gegenüberliegenden A-Säule erstreckt. Am Querträger werden weitere separat ausgebildete Bauteile befestigt, die unterschiedliche Funktionen aufweisen, wie z. B. eine Befestigung für eine bildgebende Einheit eines Head-Up-Displays oder sonstige Instrumentenbefestigungselemente wie auch andere Bauteile.

Die DE 10 2022 116 803 B3 offenbart eine Instrumententafel, die einen Tragrahmen aufweist, an dem eine Vielzahl weiterer Funktionsbauteile mittels weiteren separat ausgebildeten Trägerteilen befestigt sind, wie ein elektrisch betreibbares Anzeigeelement. Dies hat den Nachteil eines hohen Montageaufwands. Zusätzlich unterstützt der Tragrahmen aufgrund seiner Ausgestaltung keine nennenswerte Kraftableitung/Kraftaufnahme im Crashfall.

Die DE 10 2013 212 878 A1 offenbart ein Cockpitstrukturteil, das einen Cockpit-Querträger beinhaltet, an dem ein separat ausgebildetes Head-Up-Displaygehäuse mit Stützen angeordnet ist, und einen separaten Rohbau-Querträger. Auch hier besteht der Nachteil der vielen Einzelteile, die montiert werden müssen.

Die EP 1 032 528 B1 und FR 2 623 776 A1 offenbarte alternative Ausgestaltungsmöglichkeiten eines Cockpits mit einem Instrumententräger. In der EP 1 032 528 B1 wird ein Instrumentenquerträger gemäß dem Oberbegriff von Anspruch 1 beschrieben.

Die aus dem Stand der Technik bekannten Querträger erstrecken sich ausschliesslich zwischen den beiden A-Säulen und für die Aufnahme weiterer Funktionsbauteile werden weitere Tragelemente am Querträger angefügt. Zudem sind die Querträger aus dem Stand der Technik aufgrund ihrer Bauform nicht geeignet, um Kräfte in einem Crashfallaufzunehmen oder an Anbauteile abzuleiten und versagen durch Einknicken oder Brechen.

Es ist Aufgabe der Erfindung einen Instrumentenquerträger und ein damit verbundenes Verfahren zu dessen Herstellung vorzuschlagen, bei dem die Aufnahme von Funktionselementen integriert ist und der Instrumentenquerträger die Funktion der Kraftableitung/Kraftaufnahme bei einem Frontalaufprall übernimmt. Diese Aufgabe wird erfindungsgemäss dadurch gelöst, dass an die Quertraverse in Richtung Fahrzeugfront eine Platte anschliesst, wobei in der Platte mindestens eine Instrumentenöffnung zur Aufnahme eines Instruments ausgebildet ist.

Der erfindungsgemässe Instrumentenquerträger eines Kraftfahrzeugs, beinhaltet eine Quertraverse, wobei die Quertraverse sich quer zur Längsrichtung des Kraftfahrzeugs von einer A-Säule zu einer gegenüberliegenden A-Säule erstreckt. Die Längsrichtung des Fahrzeugs erstreckt sich in X-Richtung, quer bzw. rechtwinklig horizontal zur Fahrzeuglängsrichtung erstreckt sich die Y-Richtung und senkreckt zur Fahrzeuglängsrichtung oder auch zur Y-Richtung erstreckt sich die Z-Richtung, also nach unten oder oben. An die Quertraverse in Richtung Fahrzeugfront bzw. in X-Richtung schliesst eine Platte an bzw. ist an der Quertraverse angeordnet. In der Platte ist mindestens eine Instrumentenöffnung zur Aufnahme eines Instruments ausgebildet, wobei als Instrument eine bildgebende Einheit eines Head-Up-Displays wie auch sonstige Anzeigemittel wie Bordcomputer, Navigationssysteme etc. verstanden werden.

Es ist vorteilhaft, wenn der Instrumentenquerträger als ein dünnwandiges Bauteil ausgebildet ist und eine Wandstärke im Bereich zwischen 1 und 4 mm aufweist, vorzugsweise eine Wandstärke zwischen 1.5 und 3 mm. Die Wandstärke kann über den Verlauf des Instrumentenquerträgers variieren, das heisst, dass die Wandstärke in manchen Bereichen des Instrumentenquerträger, wie zum Beispiel die Quertraverse dicker z. B. bei 3.5 mm ausgebildet sein kann und in manchen Bereichen dünner ausgebildet z. B. 1.5 mm.

Erfindungsgemäß ist die Platte integral an der Quertraverse angeordnet. Das heisst, dass der Instrumentenquerträger einteilig ausgebildet ist bzw. die Quertraverse und die Platte einstückig sind bzw. ein Ganzes bilden und in einem Abguss hergestellt werden, ohne dass die Platte und die Quertraverse zusammengefügt werden müssen.

Vorzugsweise ist der Instrumentenquerträger aus einem metallischen Werkstoff hergestellt. Dies in Kombination mit der Ausgestaltung des Instrumentenquerträger erlaubt es, dass der Instrumentenquerträger den Crashanforderungen genügt und die auftretenden Kräfte ableiten und/oder aufnehmen kann, ohne zu versagen. Wobei der Instrumentenquerträger vorzugsweise aus einem Material hergestellt ist. Vorzugsweise ist der Instrumentenquerträger aus Leichtmetall hergestellt.

Vorzugsweise verläuft die Platte horizontal bzw. die Platte erstreckt sich in X-Y Richtung.

Eine bevorzugte Ausführungsform besteht darin, dass der Instrumentenquerträger als dünnwandiges, einteiliges Bauteil ausgebildet ist. Die Wandstärke kann über den Querschnitt des Instrumentenquerträgers variieren.

Vorteilhaft ist, wenn mindestens eine Instrumentenöffnung in der Platte zur Aufnahme einer bildgebenden Einheit angeordnet ist. Dadurch kann das Anbringen von weiteren Trägerelementen vermieden werden, wodurch die Wirtschaftlichkeit der Fertigung des Instrumentenquerträgers erhöht wird.

Als vorteilhaft hat sich gezeigt, wenn mindestens zwei Instrumentenöffnungen in der Platte zur Aufnahme von bildgebenden Einheiten angeordnet sind. Es zeichnet sich in der Entwicklung der Fahrzeuge ab, dass nicht nur kleinere Angaben wie die erlaubte Geschwindigkeit auf die Windschutzscheiben oder einen Anzeigeschirm projiziert werden, sondern dass die komplette Windschutzscheibe genutzt werden wird, um darauf fahrerrelevante Informationen und sogar die komplette Fahrzeugumgebung in Form von Augmented Reality in die Projektion auf die Windschutzscheibe eingebunden wird, weshalb durchaus mehr als nur eine bildgebende Einheit an einem Instrumentenquerträger angeordneten werden kann, um die Projektionsfläche vollständig abzudecken.

Eine weitere vorteilhafte Ausgestaltung der Erfindung besteht darin, dass die Instrumentenöffnung eine Kühlfläche aufweist, an der die bildgebende Einheit flächig anliegt und die Wärme der bildgebenden Einheit abtransportiert. Vorzugsweise ist die Kühlfläche integral in der Platte angeordnet und verläuft schräg zur Platte. Zusätzlich wird die grosse geschlossene Fläche des Instrumentenquerträgers zur Wärmeabfuhr genutzt, wodurch der Instrumentenquerträger als Einheit an sich als Wärmesenke fungiert. Dadurch kann auf zusätzliche (aktive) und Bauraumeinnehmende Kühlmassnahmen der bildgebenden Einheiten verzichtet werden.

Vorzugsweise weist die Instrumentenöffnung eine Kühlfläche auf, an der der bildgebende Einheit abgewandten Seite bzw. an der Rück- bzw. Unterseite Kühlrippen angeordnet sind. Durch die Kühlrippen wird Luft, vorzugsweise die durch eine HVAC-Einheit gekühlte Luft hindurchgeleitet, um die Wärme der bildgebenden Einheit abzutransportieren.

Es hat sich als vorteilhaft gezeigt, wenn in der Platte Befestigungsöffnungen angeordnet sind, die dem Befestigen der Instrumente und der HVAC-Einheit dienen. Mittels diesen Befestigungsöffnungen und vorzugsweise einem Befestigungselement wie einem Spannelement werden die zu montierenden Instrumente und Aggregate auf der Platte befestigt.

Vorzugsweise ist die Platte in Richtung Fahrzeugfront von einer Abstützung zumindest bereichsweise umgeben. Es hat sich als vorteilhaft gezeigt, wenn die Platte in Richtung Fahrzeugfront kreissegmentförmig ausgebildet ist. Vorzugsweise wird diese Kreissegmentform zumindest bereichsweise von einer bogenförmig verlaufenden Abstützung umgeben bzw. umrahmt.

Als bevorzugte Ausführungsform hat sich gezeigt, wenn die bogenförmig verlaufende Abstützung einen U-förmigen Querschnitt aufweist. Die U-Form ist vorzugsweise nach unten bzw. in negative Z-Richtung geöffnet. Vorzugsweise wird die U-Form zur Führung eines Luftkanals genutzt und kann mit einer HVAC-Einheit verbunden werden, die vorzugsweise an der Unterseite des Instrumentenquerträgers befestigt ist. Die U-Form kann als ein Teil eines Luftkanals verwendet werden, auf die ein korrespondierender Luftkanaldeckel, der entlang der U-Form verläuft und dadurch einen geschlossenen Luftkanal bildet, befestigt ist. Alternativ kann der Luftkanal als ein ausgeformter Kunststoffkanal gebildet werden, der in die U-Form eingelegt wird und entsprechenden Abgänge zur Luftzufuhr an die Windschutzscheibe aufweist. Dadurch kann optional die Windschutzscheibenbelüftung in der Abstützung direkt integriert werden, indem beispielsweise noch Lüftungsschlitze in der Abstützung vorgesehen werden, die die Luft aus einer HVAC-Einheit durch die U-förmige Abstützung an die Windschutzscheibe leitet. Selbstverständlich kann die U-Form bzw. der U-förmige Querschnitt der Abstützung auch als Kabelführung genutzt werden oder auch für beides. Es ist vorteilhaft, wenn die HVAC-Einheit an der Unterseite des Instrumentenquerträgers bzw. der Platte angeordnet ist und mit einem an der Unterseite bzw. in der U-Form der Abstützung und/oder der Quertraverse verlaufenden Luftkanals verbunden ist. Des Weiteren hat sich als vorteilhaft gezeigt, dass durch die U-Form der Abstützung und durch die integrale Anbindung der Abstützung an die Quertraverse bzw. deren Endabschnitte im Crashfall eine optimale Krafteinleitung in die Karosserie gewährleistet und die Kraftaufnahme generell verbessert wird.

Eine weitere vorteilhafte Ausgestaltung der Erfindung besteht darin, dass die Quertraverse zumindest abschnittsweise einen U-förmigen Querschnitt aufweist. Die integral am Instrumentenquerträger angeordnete Quertraverse weist vorzugsweise eine U-Form im mittleren Abschnitt auf und beidseitig anschliessende Endabschnitte. Vorzugsweise erstreckt sich zumindest ein Abschnitt des Querträgers als U-Profil. Die Endabschnitte weisen vorzugsweise einen geschlossenen Querschnitt auf. Es hat sich als vorteilhaft gezeigt, wenn die Platte an einen Schenkel des U-förmigen Querschnittes der Quertraverse integral anschliesst und sich in Fahrzeugfront erstreckt. Zudem hat sich als vorteilhaft gezeigt, wenn die Platte an einem Schenkel der Abstützung des U-förmigen Querschnitts integral anschliesst. Vorzugsweise wird die Platte dadurch zumindest bereichsweise von der Quertraverse und der Abstützung integral umgeben.

Vorzugsweise ist die U-Form bzw. der U-förmige Querschnitt der Quertraverse gegen unten bzw. in Z-Richtung offen. Dies ermöglicht z.B. eine geordnete und wohlplatzierte Führung der Kabel und/oder kann auch als Führungskanal von Zu- und Ableitungen für eine HVAC-Einheit an der Unterseite des Instrumentenquerträgers bzw. an der Unterseite der Quertraverse genutzt werden. Zudem gibt der U-förmige Querschnitt der Quertraverse eine hohe Steifigkeit.

Erfindungsgemäß ist der Instrumentenquerträger als Leichtmetalldruckgussteil ausgebildet, was der Gewichtseinsparung dient.

Es wird nochmals darauf hingewiesen, dass mit dem Hinweis eines integral angeordneten Elements am erfindungsgemässen Instrumentenquerträger, dies immer als einteilig mit dem erfindungsgemässen Instrumentenquerträger ausgebildet ist bzw. als zu einem Ganzen dazugehörend zu verstehen ist und der erfindungsgemässe Instrumentenquerträger als ein Stück hergestellt ist und genannten Elemente beinhaltet und keine separaten, strukturgebenden bzw. tragenden Teile durch irgendwelche Fügeprozesse vorgesehen sind.

Es ist vorteilhaft, wenn sich in Fahrzeuglängsrichtung zumindest teilweise ein Kanal zwischen dem Scheitelpunkt der bogenförmigen Abstützung und die Quertraverse erstreckt. Vorzugsweise erstreckt sich der Kanal entlang X-Richtung und verläuft vorzugsweise in der Mitte des Instrumentenquerträgers. Es ist vorteilhaft, wenn der Kanal an die U-Form der Abstützung anschliesst. Dadurch kann die Luftführung entlang der Abstützung ins Zentrum des Instrumentenquerträgers geführt werden, wo vorzugsweise eine HVAC-Einheit angeordnet ist. Wie bereits erwähnt, erfolgt diese Luftführung an der Unterseite des Instrumentenquerträgers. Der Kanal bringt zudem den Vorteil einer weiteren Versteifung des Instrumentenquerträgers mit sich, wodurch der Instrumentenquerträger bei einem Frontalaufprall weniger zum Einknicken neigt.

Vorzugsweise erstreckt sich der Kanal in der Platte. Es hat sich als vorteilhaft gezeigt, wenn der Kanal integral in der Platte ausgebildet ist. Zudem ist es auch vorteilhaft, wenn der Kanal sich nur über einen bestimmten Bereich der Platte erstreckt.

Als vorteilhafte Ausgestaltung hat sich gezeigt, wenn sich in Fahrzeuglängsrichtung von der Quertraverse zur Abstützung ein integraler Lenksäulenkanal erstreckt. Es ist vorteilhaft, wenn der Lenksäulenkanal zwischen dem Endabschnitt und dem U-förmigen Teil der Quertraverse angeordnet ist und sich in X-Richtung erstreckt. Es hat sich als vorteilhaft gezeigt, wenn der Lenksäulenkanal als nach unten bzw. in negative Z-Richtung offene U-Form ausgebildet ist.

Es ist vorteilhaft, wenn der Lenksäulenkanal U-förmig ausgebildet ist. Neben dem, dass ein solcher Lenksäulenkanal der Durchführung der Lenksäule im Kraftfahrzeug dient, dient er auch der Versteifung des erfindungsgemässen Instrumentenquerträgers. Als vorteilhaft hat sich auch gezeigt, wenn zudem noch Rippen in der U-Form angeordnet sind.

Vorzugsweise ist die U-Form des Lenksäulenkanals gegen unten bzw. in Z-Richtung offen. Wie bereits erwähnt ist die vorteilhafte Ausführungsform unteranderem dem Aufbau eines Kraftfahrzeugs geschuldet, da die Lenksäule hindurchragen muss. Vorzugsweise weist die Quertraverse an den Endabschnitten einen rohrförmigen Abschnitt auf mit einem geschlossenen Querschnitt. Es ist vorteilhaft, wenn der rohrförmige Abschnitt durchgehend in Y-Richtung geöffnet ist und in den U-förmigen Abschnitt der Quertraverse übergeht. Dadurch können z. B. Kabel von der einen A-Säule bis zur anderen A-Säule gezogen werden. Als alternative Ausführungsform hat sich als vorteilhaft gezeigt, wenn die Endabschnitte einen geschlossenen Querschnitt aufweisen bzw. rohrförmig ausgebildet sind und in Y-Richtung, hin zum mittleren Abschnitt der Quertraverse, der eine U-Form aufweist, verschlossen sind und somit kein durchgehender Kanal von einer A-Säule zur anderen A-Säule gebildet ist. Anstatt eines durchgängigen Kanals ist ein Begrenzungselement am Ende des geschlossenen Querschnitts bzw. des rohrförmigen Abschnitts des Endabschnittes im Übergangsbereich zum U-förmigen Querschnitt angeordnet. Vorzugsweise weisen die Endabschnitte an den äusseren Enden jeweils eine A-Säulenanbindung auf, um mit den A-Säulen verbunden zu werden.

Diese Aufgabe wird erfindungsgemäss auch dadurch gelöst, dass der Instrumentenquerträger im Druckgussverfahren hergestellt wird. Durch das Herstellen des Instrumentenquerträgers können diverse Instrumente in einem Bauteil aufgenommen werden, ohne weitere Träger an der Quertraverse anbringen zu müssen. Zudem kann es dünnwandig ausgebildet werden und erfüllt dennoch die Anforderungen der Steifigkeit und der Crashanforderungen.

Alle Ausgestaltungsmöglichkeiten sind untereinander frei kombinierbar, solange diese Kombinationen unter das Schutzbegehren der beigefügten Ansprüche fallen. Zur Vermeidung von Wiederholungen beziehen sich die Merkmale der Vorrichtung automatisch auch auf das Verfahren und umgekehrt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht der Oberseite des erfindungsgemässen Instrumentenquerträgers von schräg vorne auf die Abstützung gerichtet,
- Fig. 2: eine dreidimensionale Ansicht der Oberseite des erfindungsgemässen Instrumentenquerträgers von schräg hinten auf die Quertraverse gerichtet,
- Fig. 3: eine dreidimensionale Ansicht der Unterseite des erfindungsgemässen Instrumentenquerträgers von schräg vorne auf die Abstützung gerichtet,
- Fig. 4: eine dreidimensionale Ansicht der Unterseite des erfindungsgemässen Instrumentenquerträgers von schräg vorne auf die Abstützung gerichtet,
- Fig. 5: eine dreidimensionale Ansicht der Unterseite des erfindungsgemässen Instrumentenquerträgers von schräg vorne auf die Abstützung gerichtet und
- Fig 6: eine dreidimensionale Ansicht des erfindungsgemässen Instrumentenquerträgers in einer schematischen Fahrzeugkarosserie eingebaut.

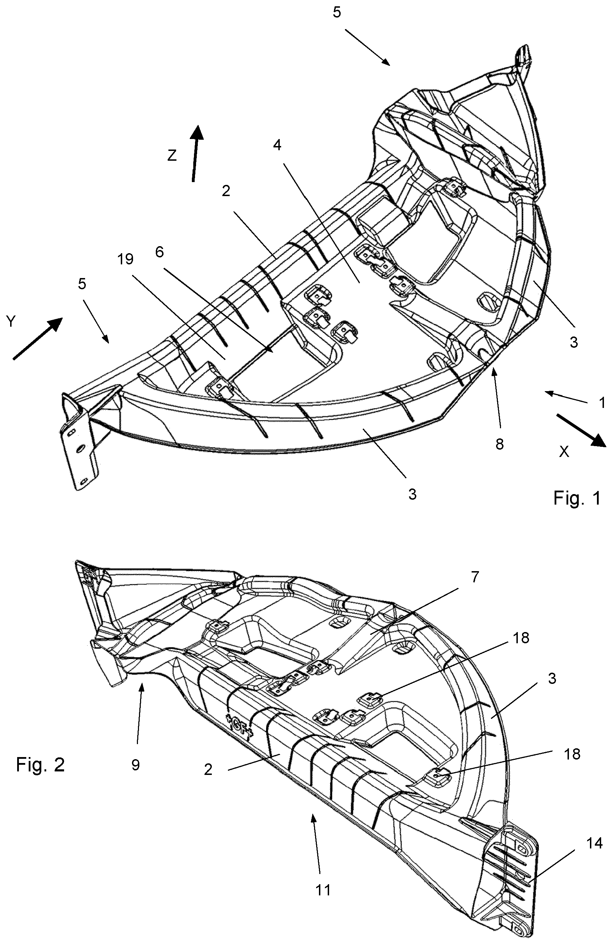

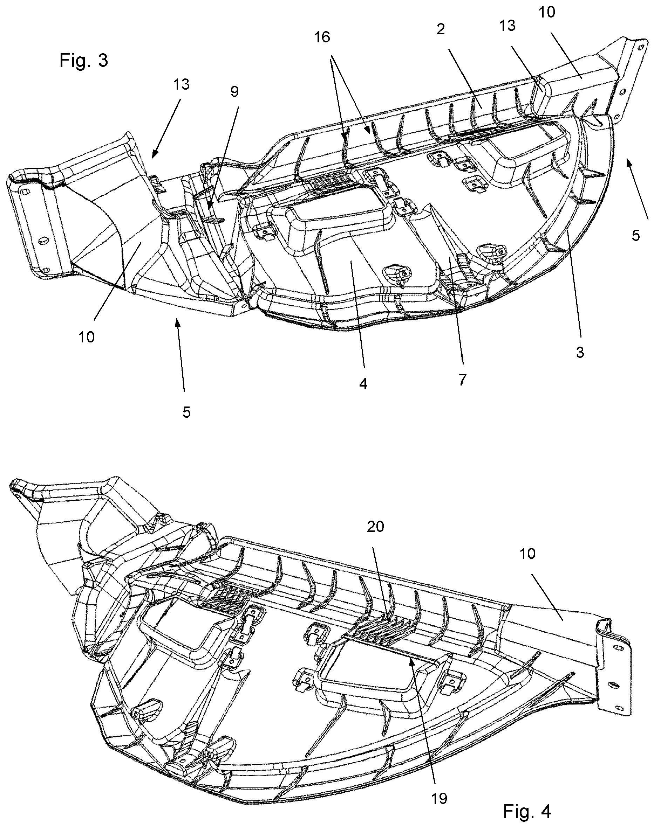

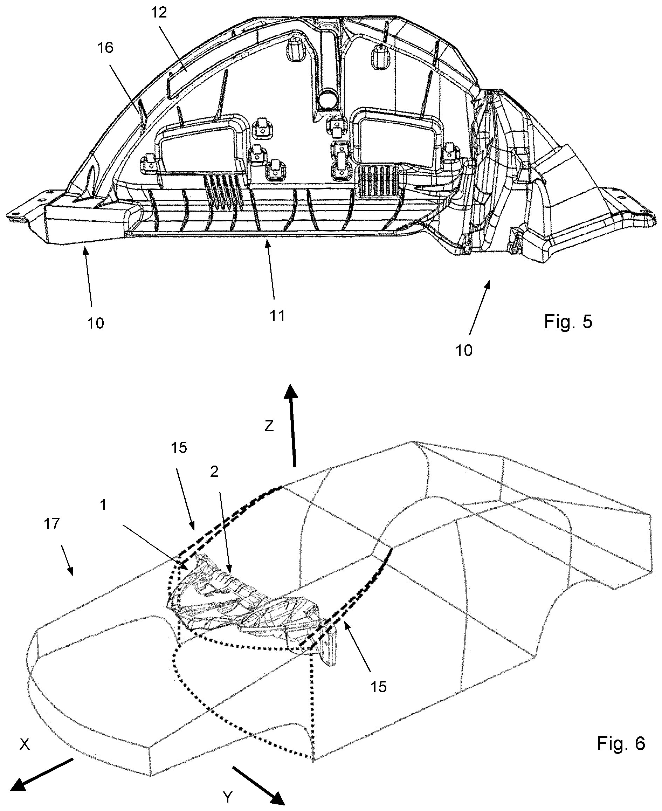

Fig. 1 zeigt eine dreidimensionale Ansicht auf die Oberseite eines erfindungsgemässen Instrumentenquerträgers 1 eines Kraftfahrzeugs. Der Instrumentenquerträger 1 beinhaltet eine Quertraverse 2, besser ersichtlich in Fig. 2. Die Quertraverse 2 erstreckt sich in Y-Richtung quer zur Fahrzeuglängsrichtung X, von einer A-Säule 15 zu gegenüberliegenden A-Säule 15 eines Kraftfahrzeugs, was aus Fig. 6 gut ersichtlich ist. An die Quertraverse 2 in Richtung Fahrzeugfront 17 schliesst eine Platte 4 an, wobei in der Platte mindestens eine Instrumentenöffnung 6 zur Aufnahme eines Instruments ausgebildet ist. Die Platte 4 schliesst vorzugsweise integral an die Quertraverse 2 an, wodurch der Instrumentenquerträger 1 einteilig bzw. als ein Ganzes ausgebildet ist. Es ist vorteilhaft, wenn die Platte 2 als Kreissegment ausgebildet ist. Die Quertraverse 2 weist vorzugsweise an den beiden sich gegenüberliegenden Enden Endabschnitte 5 auf, wobei diese unterschiedlich ausgestaltet sein können, wie in der dargestellten Ausführungsform der Fall ist. Zudem beinhaltet der Instrumentenquerträger 1 vorzugsweise eine Abstützung 3, die integral an die Endabschnitte 5 der Quertraverse 2 anschliesst. Die Abstützung 3 erstreckt sich in Bogenform in Richtung Fahrzeugfont 17 bzw. in X-Richtung und umgibt die kreissegmentförmig ausgebildete Platte 4. Wobei der Scheitelpunkt 8 der bogenförmigen Abstützung 3 den äussersten Punkt in X-Richtung der Abstützung 3 bildet und die Enden der Abstützung 3 an die Quertraverse 2 bzw. die Endabschnitte 5 integral anschliessen. Die Quertraverse 2 und die Abstützung 3 umgeben zumindest bereichsweise die dazwischen angeordnete Platte 4. Die teilweise umrahmte Platte 4, die Abstützung und die Quertraverse 2 sind integral bzw. zusammen als ein Teil ausgebildet. Der erfindungsgemässe Instrumentenquerträgers 1 ist aus einem Material, vorzugsweise einem metallischen Material hergestellt. Erfindungsgemäß aus einem Leichtmetall, wie auch dass der Instrumentenquerträger 1 in einem Abguss hergestellt ist. Die Quertraverse 2 weist zumindest abschnittsweise, vorzugsweise im mittleren Abschnitt 11 einen U-förmigen Querschnitt auf, der nach unten bzw. in negative Z-Richtung geöffnet ist. Dies ist gut aus den Fig. 3-5 zu erkennen, bei der die Unterseite des erfindungsgemässen Instrumentenquerträgers 1 gezeigt ist. Der als U-Profil ausgebildete Abschnitt in der Quertraverse 2 kann vorzugsweise als Kabelführung und/oder zur Ausbildung eines Lüftungskanals verwendet werden. Vorzugsweise sind im U-förmigen Querschnitt der Quertraverse 2 noch Rippen 16 zur zusätzlichen Verstärkung angeordnet. Die Abstützung 3 weist vorzugsweise ebenfalls einen U-förmigen, nach unten offenen Querschnitt auf, in den Kabel eingelegt werden können und/oder die U-Form als Teil eines Lüftungskanals eingesetzt werden kann. Fig.5 zeigt den Einsatz der U-Form der Abstützung 3 als Lüftungskanal indem in die gegen unten offene U-Form eine ausgeformter Kunststoffkanal 12 eingelegt wird. Alternativ kann auch nur ein Kanaldeckel auf die U-Form aufgebracht werden, um einen Kanal zu bilden. Vorzugsweise ist an der Unterseite des Instrumentenquerträgers 1 eine HVAC-Einheit angeordnet, die dann mit dem Lüftungskanal verbunden ist. Es besteht dann die Möglichkeit an der Aussenseite der U-förmigen Abstützung 2 Schlitze anzubringen, die die Zuführung der Luft an die Windschutzscheibe ermöglichen. Es ist vorteilhaft, wenn in der Platte 4 mindestens eine Instrumentenöffnung 6 vorgesehen ist, vorzugsweise für die Anordnung von Instrumenten wie beispielsweise bildgebenden Einheiten von Head-Up-Displays oder anderen Anzeigegeräten. Als vorteilhafte Ausführungsform hat sich gezeigt, wenn mindestens zwei Instrumentenöffnungen 6 in der Platte 4 vorgesehen sind. Denn ein Trend hat gezeigt, dass zukünftige Fahrzeuge neben wichtigen Informationen für den Fahrer auch die Umgebung, eingebunden in Form von Augmented Reality, auf die Windschutzscheibe projizieren werden und durch die Anordnungen mehrerer bildgebender Einheiten kann auf die komplette Windschutzscheibe projiziert werden, wobei auch nicht direkt auf die Windschutzscheibe projiziert werden muss, sondern auch auf separate Projektionsflächen projiziert werden kann. Selbstverständlich können die Instrumentenöffnungen 6 auch für andere Instrumente wie eine Navigationssystem, oder zur Anzeige von weiteren Fahrerinformationen genutzt werden. In Fig. 1 und 2 sind die Kühlflächen 19 gut ersichtlich an denen die bildgebende Einheit (nicht dargestellt) flächig anliegt. Damit eine noch effizientere Wärmeableitung entsteht, weist die Kühlfläche 19 an der der bildgebenden Einheit abgewandten Seite Kühlrippen 20 auf. Diese sind gut in den Fig. 3-5 zu erkennen bei denen die Unterseite des Instrumentenquerträgers 1 ersichtlich ist. Über die Kühlrippen 20 kann die durch die bildgebenden Einheiten entstehende Wärme passiv und effizient an die Umgebungsluft abgeleitet werden.

Vorzugsweise werden die Instrumente mittels Spannelementen (nicht dargestellt) fixiert, wobei die Spannelemente vorzugsweise in den dafür vorgesehen Befestigungsöffnungen 18 in der Platte 4 befestigt werden.

Als vorteilhaft hat sich auch gezeigt, wenn ein Kanal 7 sich zwischen dem Scheitelpunkt 8 der bogenförmigen Abstützung 3 und der Quertraverse 2 erstreckt. Der Kanal 7 verläuft entlang der X-Richtung und schliesst vorzugsweise an die U-Form der Abstützung 2 an. Dies ermöglicht einen durchgehend verlaufenden Kanal, der von der U-Form der Abstützung in den Kanal 7 übergeht und dadurch auch wie in Fig. 6 ein möglicher Lüftungskanal bis zur HVAC-Einheit (nicht dargestellt) die vorzugsweise an der Unterseite des Instrumentenquerträgers 1 angeordnet ist. Der Kanal 7 erstreckt sich in der Platte 4 bzw. ist als längliche Vertiefung an der Unterseite des Instrumentenquerträgers 1 und an der Oberseite durch eine herausragende Erhebung gebildet. Wobei der Kanal 7 sich teilweise durch die Platte 4, wie abgebildet oder auch durch die komplette Platte 4 erstrecken kann. Der Kanal 7 erhöht zudem auch die Steifigkeit des erfindungsgemässen Instrumentenquerträgers 1. Des Weiteren ist es vorteilhaft, wenn ein Lenksäulenkanal 9 sich in X-Richtung ausgehend der Quertraverse 2 bis hin zur Abstützung 3 erstreckt. Der Lenksäulenkanal 9 ist U-förmig ausgebildet und ist gegen unten bzw. in Z-Richtung offen, dadurch kann die Lenksäule (nicht dargestellt) hindurchragen. Zudem bildet der Lenksäulenkanal 9 wiederum eine Versteifung im Instrumentenquerträgers 1. Auch hier können vorzugsweise Rippen 16 im U-förmigen Querschnitt angeordnet sein. Aus den Fig. 1-5 ist gut ersichtlich, dass es sich beim erfindungsgemässen Instrumentenquerträgers 1 um ein dünnwandig ausgebildetes Bauteil handelt, das heisst, die Wandstärke liegt im Bereich zwischen 1 bis 4 mm. Die beiden Endabschnitte 5 an der Quertraverse 2 weisen vorzugsweise, wie in den Figuren ersichtlich einen rohrförmigen Abschnitt 10 auf, wobei in diesem Abschnitt der Querschnitt eine geschlossene Form aufweist. Der rohrförmige Abschnitt 10 schliesst an den mittleren Abschnitt der Quertraverse 2, der einen U-förmigen Querschnitt aufweist, was gut in Fig. 3 ersichtlich ist. Die Abschnitte müssen nicht direkt aneinander anschliessen, es kann auch wie auf der anderen Seite der Lenksäulenkanal 9 noch dazwischen hineinragen. Vorzugsweise sind die rohrförmigen Abschnitte 10 am Endabschnitt konisch ausgebildet, damit das Entformen möglich ist. In der abgebildeten Ausführungsform weist der rohrförmige Abschnitt 10 der Quertraverse 2 ein Begrenzungselement 13 auf, wodurch kein durchgehender Kanal von der A-Säule zur gegenüberliegenden A-Säule 15 mehr entsteht. Selbstverständlich kann auch auf das Begrenzungselement 13 verzichtet werden und es entsteht ein durchgehender Kanal zwischen den A-Säulen 15. An den äusseren Enden der Endabschnitte 5 der Quertraverse 2 mit dem der Instrumentenquerträger 1 an den A-Säulen 15 befestig ist, sind A-Säulenanbindungen 14 angeordnet. Damit kann der Instrumentenquerträger 1 an die A-Säulen 15 der Karosserie gefügt werden.

### Bezugszeichenliste

- 1: Instrumentenquerträger
- 2: Quertraverse
- 3: Abstützung
- 4: Platte
- 5: Endabschnitt
- 6: Instrumentenöffnung
- 7: Kanal
- 8: Scheitelpunkt
- 9: Lenksäulenkanal
- 10: Rohrförmiger Abschnitt des Endabschnitts
- 11: Mittlerer Abschnitt Quertraverse
- 12: Kunststoffkanal
- 13: Begrenzungselement
- 14: A-Säulenanbindung
- 15: A-Säule
- 16: Rippe
- 17: Fahrzeugfront
- 18: Befestigungsöffnungen
- 19: Kühlfläche
- 20: Kühlrippen

- X: Fahrzeuglängsrichtung
- Y: quer zur Fahrzeuglängsrichtung bzw. rechtwinklig horizontal zur Fahrzeuglängsrichtung
- Z: senkrecht zur Fahrzeuglängsrichtung

## Patentansprüche

1. Instrumentenquerträger (1) eines Kraftfahrzeugs, enthaltend eine Quertraverse (2), wobei sich die Quertraverse (2) quer (Y) zur Längsrichtung (X) des Kraftfahrzeugs von einer A-Säule (15) zu einer gegenüberliegenden A-Säule (15) erstreckt, wobei an die Quertraverse (2) in Richtung Fahrzeugfront (17) eine Platte (4) anschliesst, wobei in der Platte (4) mindestens eine Instrumentenöffnung (6) zur Aufnahme eines Instruments ausgebildet ist,
**dadurch gekennzeichnet, dass**
die Platte (4) integral an der Quertraverse (2) angeordnet ist und der Instrumentenquerträger (1) als Leichtmetalldruckgussteil ausgebildet ist.

2. Instrumentenquerträger (1) nach Anspruch 1, **dadurch gekennzeichnet, dass** der Instrumentenquerträger (1) aus einem metallischen Werkstoff hergestellt ist.

3. Instrumentenquerträger (1) nach einem der Ansprüche 1 oder 2, **dadurch gekennzeichnet, dass** die Platte (4) horizontal verläuft.

4. Instrumentenquerträger (1) nach einem der Ansprüche 1 bis 3, **dadurch gekennzeichnet, dass** der Instrumentenquerträger (1) als dünnwandiges, einteiliges Bauteil ausgebildet ist.

5. Instrumentenquerträger (1) nach einem der Ansprüche 1 oder 4, **dadurch gekennzeichnet, dass** mindestens eine Instrumentenöffnung (6) in der Platte zur Aufnahme einer bildgebenden Einheit angeordnet ist.

6. Instrumentenquerträger (1) nach einem der Ansprüche 1 bis 5, **dadurch gekennzeichnet, dass** mindestens zwei Instrumentenöffnungen (6) in der Platte (4) zur Aufnahme von bildgebenden Einheiten angeordnet sind.

7. Instrumentenquerträger (1) nach einem der Ansprüche 1 bis 6, **dadurch gekennzeichnet, dass** die Instrumentenöffnung (6) eine Kühlfläche (19) aufweist, an der die bildgebende Einheit flächig anliegt und die Wärme der bildgebenden Einheit abtransportiert.

8. Instrumentenquerträger (1) nach einem der Ansprüche 1 bis 7, **dadurch gekennzeichnet, dass** die Instrumentenöffnung (6) eine Kühlfläche (19) aufweist, an der der bildgebende Einheit abgewandten Seite Kühlrippen (20) angeordnet sind.

9. Instrumentenquerträger (1) nach einem der Ansprüche 1 bis 8, **dadurch gekennzeichnet, dass** in der Platte (4) Befestigungsöffnungen (18) angeordnet sind, die dem Befestigen der Instrumente dienen.

10. Instrumentenquerträger (1) nach einem der Ansprüche 1 bis 9, **dadurch gekennzeichnet, dass** die Platte (4) in Richtung Fahrzeugfront (17) von einer Abstützung (3) zumindest bereichsweise umgeben ist.

11. Instrumentenquerträger (1) nach einem der Ansprüche 1 bis 10, **dadurch gekennzeichnet, dass** die Quertraverse (2) zumindest abschnittsweise einen U-förmigen Querschnitt aufweist.

12. Instrumentenquerträger nach Anspruch 10, **dadurch gekennzeichnet, dass** die Abstützung (3) einen U-förmigen Querschnitt aufweist.

13. Verfahren zur Herstellung eines Instrumentenquerträger (1) nach einem der Ansprüche 1 bis 12, **dadurch gekennzeichnet, dass** der Instrumentenquerträger (1) im Druckgussverfahren hergestellt wird.

## Claims

1. An instrument panel crossmember (1) of a motor vehicle, comprising a transverse member (2), wherein the transverse member (2) extends transversely (Y) to the longitudinal direction (X) of the motor vehicle from an A-pillar (15) to an opposite A-pillar (15), wherein a plate (4) adjoins the transverse member (2) in the direction of a vehicle front (17), wherein at least one instrument opening (6) for receiving an instrument is formed in the plate (4), **characterized in that** the plate (4) is arranged integrally on the transverse member (2), and the instrument panel crossmember (1) is formed as a light-metal die-cast component.

2. The instrument panel crossmember (1) according to claim 1, **characterized in that** the instrument panel crossmember (1) is produced from a metallic material.

3. The instrument panel crossmember (1) according to either claim 1 or claim 2, **characterized in that** the plate (4) extends horizontally.

4. The instrument panel crossmember (1) according to any one of claims 1 to 3, **characterized in that** the instrument panel crossmember (1) is formed as a thin-walled, one-piece component.

5. The instrument panel crossmember (1) according to either claim 1 or claim 4, **characterized in that** at least one instrument opening (6) for receiving an imaging unit is arranged in the plate.

6. The instrument panel crossmember (1) according to any one of claims 1 to 5, **characterized in that** at least two instrument openings (6) for receiving imaging units are arranged in the plate (4).

7. The instrument panel crossmember (1) according to any one of claims 1 to 6, **characterized in that** the instrument opening (6) has a cooling surface (19) against which the imaging unit bears in surface contact and which dissipates the heat of the imaging unit.

8. The instrument panel crossmember (1) according to any one of claims 1 to 7, **characterized in that** the instrument opening (6) has a cooling surface (19), wherein cooling ribs (20) are arranged on the side facing away from the imaging unit.

9. The instrument panel crossmember (1) according to any one of claims 1 to 8, **characterized in that** fastening openings (18) which serve to fasten the instruments are arranged in the plate (4).

10. The instrument panel crossmember (1) according to any one of claims 1 to 9, **characterized in that** the plate (4) is at least regionally surrounded by a support (3) in the direction of the vehicle front (17).

11. The instrument panel crossmember (1) according to any one of claims 1 to 10, **characterized in that** the transverse member (2) has a U-shaped cross section at least in sections.

12. The instrument panel crossmember according to claim 10, **characterized in that** the support (3) has a U-shaped cross section.

13. A method for producing an instrument panel crossmember (1) according to any one of claims 1 to 12, **characterized in that** the instrument panel crossmember (1) is produced by a die-casting process.

## Revendications

1. Traverse du tableau de bord (1) d'un véhicule automobile, comprenant une traverse (2), ladite traverse (2) s'étendant transversalement (Y) par rapport à la direction longitudinale (X) du véhicule automobile, depuis un montant A (15) jusqu'à un montant A opposé (15), une plaque (4) étant raccordée à la traverse (2) en direction de l'avant du véhicule automobile (17), et dans laquelle la plaque (4) comporte au moins une ouverture pour instruments (6) destinée à recevoir un instrument, **caractérisée en ce que** la plaque (4) est formée d'un seul tenant avec la traverse (2) et que la traverse du tableau de bord (1) est réalisée sous la forme d'une pièce moulée sous pression en métal léger.

2. Traverse du tableau de bord (1) selon la revendication 1, **caractérisée en ce que** la traverse du tableau de bord (1) est fabriquée dans un matériau métallique.

3. Traverse du tableau de bord (1) selon l'une des revendications 1 ou 2, **caractérisée en ce que** la plaque (4) s'étend horizontalement.

4. Traverse du tableau de bord (1) selon l'une des revendications 1 à 3, **caractérisée en ce que** la traverse du tableau de bord (1) est réalisée sous la forme d'un composant monobloc à paroi mince.

5. Traverse du tableau de bord (1) selon l'une des revendications 1 ou 4, **caractérisée en ce qu'**au moins une ouverture pour instruments (6) est disposée dans la plaque (4) et est agencée pour recevoir une unité d'imagerie.

6. Traverse du tableau de bord (1) selon l'une des revendications 1 à 5, **caractérisée en ce qu'**au moins deux ouvertures pour instruments (6) sont disposées dans la plaque (4) et sont prévues pour recevoir des unités d'imagerie.

7. Traverse du tableau de bord (1) selon l'une des revendications 1 à 6, **caractérisée en ce que** l'ouverture pour instruments (6) présente une surface de refroidissement (19) contre laquelle l'unité d'imagerie repose à plat et qui évacue la chaleur de l'unité d'imagerie.

8. Traverse du tableau de bord (1) selon l'une des revendications 1 à 7, **caractérisée en ce que** l'ouverture pour instruments (6) comporte une surface de refroidissement (19) sur le côté opposé à l'unité d'imagerie, de laquelle sont disposées des ailettes de refroidissement (20).

9. Traverse du tableau de bord (1) selon l'une des revendications 1 à 8, **caractérisée en ce que** la plaque (4) comporte des orifices de fixation (18) qui servent à la fixation des instruments.

10. Traverse du tableau de bord (1) selon l'une des revendications 1 à 9, **caractérisée en ce que** la plaque (4) est entourée, au moins par endroits, d'un support (3) en direction de l'avant du véhicule automobile (17).

11. Traverse du tableau de bord (1) selon l'une des revendications 1 à 10, **caractérisée en ce que** la traverse (2) présente, au moins par sections, une section transversale en forme de U.

12. Traverse du tableau de bord selon la revendication 10, **caractérisée en ce que** le support (3) présente une section transversale en forme de U.

13. Procédé de fabrication d'une traverse du tableau de bord (1) selon l'une des revendications 1 à 12, **caractérisé en ce que** la traverse du tableau de bord (1) est fabriquée par moulage sous pression.
